# EUROPÄISCHE PATENTSCHRIFT

(11) **EP 2 709 374 B1**
(45) Veröffentlichungstag und Bekanntmachung des Hinweises auf die Patenterteilung: **20.11.2019**
(21) Anmeldenummer: 13182860.0
(22) Anmeldetag: 03.09.2013
(51) Int. Cl.: H04Q 9/00

(54) **Vorrichtung zum Einsatz in einem Messsystem zur Erfassung von übertragener Energie**
Device for use in a measurement system for detecting transmitted energy
Dispositif destiné à être utilisé dans un système de mesure pour l'enregistrement de l'énergie transmise

(30) Priorität: 14.09.2012 DE 102012216483; 07.12.2012 DE 102012222573
(43) Veröffentlichungstag der Anmeldung: 19.03.2014
(73) Patentinhaber: Power Plus Communications AG, 68167 Mannheim (DE)
(72) Erfinder: Schönberg, Ingo, 69469 Weinheim (DE); Arzberger, Michael, 68259 Mannheim (DE); Wagner, Janosch, 97486 Königsberg (DE)
(74) Vertreter: Patent- und Rechtsanwälte Ullrich & Naumann

(56) Entgegenhaltungen:
- GB-A- 2 461 348
- "Anforderungen an die Interoperabilitaet der Kommunikationseinheit eines intelligenten Messsystems fuer Stoff- und Energiemengen", BSI: TECHNICHE RICHTLINE BSI TR-03109, Bd. 0.20, 10. Oktober 2011 (2011-10-10), XP002772608,
- STEGELMANN M., KESDOGAN D.: "GridPriv. A Smart Metering Architecture Ofering K-Anonymity", IEEE 11TH INTERNATIONAL CONFERENCE ON TRUST, SECURITY AND, 25. Juni 2012 (2012-06-25), - 27. Juni 2012 (2012-06-27), Seiten 419-426, XP002772609,
- "Physikalisch Technische Bundesanstalt: Software-Anforderungen an Messgeraete und Zusatzeinrichtungen gemaess PTBA-A50.7. Anhang PTB-A50.7-3.", PHYSIKALISCH TECHNISCHE BUNDESANSTALT, 3. April 2002 (2002-04-03), XP002772610,

## Beschreibung

Die Erfindung betrifft ein Gateway zum Einsatz in einem Messsystem zur Erfassung von übertragener Energie.

Weltweit werden Anstrengungen unternommen, elektronische Messsysteme zur Erfassung von übertragener Energie zu etablieren. Entsprechende Ansätze sind insbesondere für den Verbrauch oder die Erzeugung von elektrischer Energie, aber auch für das Transportieren von Gas, Wasser oder Wärme vorhanden. Diese Messsysteme sollen die Beherrschbarkeit sehr großer Versorgungsnetzwerke mit sehr vielen dezentralen Einspeisepunkten und schwankender Verfügbarkeit des transportierten Gutes verbessern. Aus diesem Grund ist beispielsweise innerhalb der Europäischen Union eine Reihe von Verordnungen entstanden, die eine Umstellung von konventionellen Messsystemen auf elektronische Messsysteme forcieren.

Mit dem Einsatz elektronischer Messsysteme und den damit erhobenen Daten werden datenschutzrechtliche Aspekte immer wichtiger. So können beispielsweise bei geschickter Auswertung der Daten eines Verbrauchszählers für elektrische Energie die Lebensgewohnheiten eines Bewohners recht genau rekonstruiert werden. Bei ausreichend granularen Daten kann sogar das durch den Bewohner konsumierte Fernsehprogramm ermittelt werden, da moderne Fernsehgeräte einen von dem angezeigten Bild abhängigen Stromverbrauch haben. Dies lässt erkennen, dass die mit derartigen elektronischen Messsystemen erhobenen Daten zu schützen sind, um Missbrauch zu verhindern oder zumindest erheblich zu erschweren.

Daher gibt es weltweit Überlegungen und Anstrengungen, den Datenschutz bei derartigen Messsystemen zu verbessern oder überhaupt erst zu installieren. In der Europäischen Union sind Bemühungen auf Ebene der Europäischen Kommission zu vernehmen, die sehr wahrscheinlich zu einer entsprechenden Richtlinie führen werden. In Deutschland hat der Gesetzgeber im Bereich der Erfassung elektrischer Energie und von Gas bereits reagiert und Regelungen bezüglich der Energiedatenübertragung erlassen. Diese Regelungen sind in dem Gesetz über die Elektrizitäts- und Gasversorgung (EnWG) in der Fassung vom 16. Januar 2012 und dort insbesondere in den §§ 21e, 21f und 21i enthalten. Danach dürfen zur Datenerhebung, -verarbeitung, -speicherung, -prüfung und -übermittlung ausschließlich solche technischen Systeme und Bestandteile eingesetzt werden, die den Anforderungen eines Schutzprofils und den Anforderungen an die Gewährleistung von Interoperabilität genügen. Die Einhaltung der Regelungen muss in einem Zertifizierungsverfahren nachgewiesen werden. Dadurch ergeben sich für die Betreiber von Energieversorgungsanlagen neue, zuvor nie dagewesene Anforderungen für Datenschutz und -sicherheit. Das komplette Messsystem muss diesen Anforderungen genügen, was erheblichen technischen Aufwand mit sich bringt.

Die allgemeinen Anforderungen des EnWG sind durch ein Schutzprofil und eine Technische Richtlinie des Bundesamts für Sicherheit in der Informationstechnik (BSI) konkretisiert. Das Schutzprofil, das in der Version 01.01.01 im August 2011 und in der Version 0.20 im November 2011 veröffentlicht wurde, schreibt eine Aufteilung der Messsysteme in eine Messeinrichtung (nachfolgend auch als SmartMeter oder Zähler bezeichnet) und einen Gateway (nachfolgend auch als SmartMeter-Gateway oder kurz SMGW bezeichnet) vor, wobei die Kommunikation von außen mit dem SmartMeter ausschließlich über den SmartMeter-Gateway erfolgt. Ein transparenter Zugriff auf den SmartMeter ist nicht zulässig. SmartMeter-Gateways müssen nach Schutzprofil und Technischer Richtlinie zertifiziert werden:
- Zertifizierung nach dem Schutzprofil des BSI, um Datenschutz und Datensicherheit zu gewährleisten.
- Zertifizierung nach der Technischen Richtlinie des BSI, um die technische Umsetzung der Anforderungen aus dem Schutzprofil festzustellen und eine Interoperabilität zwischen den Systemen sicherzustellen.

Zum Erfüllen der Anforderungen werden üblicherweise vorhandene Implementierungen/Plattformen dahingehend modifiziert, dass die Anforderungen ganzheitlich erfüllt werden. Hierzu wird ein bestehender Gateway geeignet ergänzt, um die durch die Regelungen geforderten Funktionen zu bieten, beispielsweise das Bereitstellen eines gesicherten Tunnels zu einem Kommunikationsteilnehmer oder das Steuern des Zugriffs auf einzelne Daten im Messwertspeicher des Gateways mittels Zugriffsprofilen.

Auch wenn durch diese Herangehensweise bestehende Gateways gut auf die neuen Vorschriften angepasst und die Ressourcen des Gateways durch geschickte Implementierung der Komponenten optimal genutzt werden können, ergeben sich im praktischen Betrieb ein Reihe von Nachteilen. Gateways sind relativ komplexe Vorrichtungen, bei denen jeder Bestandteil mit von der Zertifizierung erfasst ist. Dadurch ist die Zertifizierung aufwändig und zeitintensiv. Andererseits kann ein zertifiziertes Gerät nicht ohne Weiteres geändert werden, ohne dass eine Neuzertifizierung erforderlich würde. Dadurch ist jede technische Verbesserung des Gateways mit erheblichem Aufwand und hohen Kosten verbunden, was das Messsystem insgesamt verteuert und erhebliche Auswirkungen auf die Flexibilität und damit den Betrieb des Messsystems hat.

Der vorliegenden Erfindung liegt daher die Aufgabe zugrunde, ein Gateway der eingangs genannten Art derart auszugestalten und weiterzubilden, dass ein flexibler Einsatz des Gateways in einem Messsystem zur Erfassung von übertragener Energie bei gleichzeitig möglichst geringen Kosten erreichbar ist.

Erfindungsgemäß wird die voranstehende Aufgabe durch die Merkmale des Anspruchs 1 gelöst. Danach umfasst das in Rede stehende Gateway ein erstes Modul und ein zweites Modul, wobei das erste und das zweite Modul über mindestens eine Schnittstelle kommunizierend miteinander verbunden sind, wobei in dem ersten Modul die Komponenten des Gateways integriert sind, die einer Zertifizierung nach Regelungen bezüglich Energiedatenübertragungen, insbesondere einer regulatorischen Vorschrift, unterzogen werden müssen, und wobei in dem zweiten Modul die Komponenten des Gateways integriert sind, die nach den Regelungen bezüglich Energiedatenübertragungen keiner Zertifizierung bedürfen.

In erfindungsgemäßer Weise ist zunächst erkannt worden, dass Regelungen bezüglich Energiedatenübertragung meist keine derart detaillierten Forderungen stellen, dass die Zertifizierung der vollständigen Vorrichtung, beispielsweise des kompletten Gateways, notwendig ist. Vielmehr geben viele Regelungen nur gewisse Funktionen und die Bereitstellung bestimmter Schnittstellen vor. Auf welche Weise die geforderten Funktionen und Schnittstellen technisch realisiert sind, lassen viele der Regelungen offen. Dies sei anhand des Schutzprofils und der Technischen Richtlinie des BSI näher erläutert. In der Technischen Richtlinie sind die folgenden Schnittstellen mit unterschiedlichem Detaillierungsgrad definiert:
- WAN (Wide Area Network): Schnittstelle zum Administrator des Gateways und zu externen Marktteilnehmer.
- LMN (Local Metrological Network): Schnittstelle zu den SmartMetern.
- HAN (Home Area Network): Schnittstelle zum Endverbraucher und zur Steuerung sogenannter CLS (Controllable Local System).

Wie die Schnittstellen konkret realisiert sind, ist nicht vorgeschrieben. So kann die WAN-Schnittstelle beispielsweise mittels GPRS (General Packet Radio Service), DSL (Digital Subscriber Line) oder PLC (PowerLine Communication). Für die LMN-Schnittstelle ist die Auswahl auf Wireless M-Bus oder RS485 beschränkt.

Auf dem SMGW müssen unter anderem die folgenden Funktionen umgesetzt sein:
- Abfrage und Speicherung der Messwerte vom Zähler:
   Der SmartMeter-Gateway unterstützt unterschiedliche Protokolle zur Kommunikation mit dem Zähler und legt die Messwerte im persistenten Speicher (dauerhafte Datenspeicherung) ab.
- Auswertung im SMGW:
   Im Gateway können sowohl Netzstatusdaten- als auch Tarifprofile hinterlegt werden. Diese Profile bestimmen, wie Messwerte auf dem Gateway vor der Übertragung verarbeitet werden. Jedes Auswertungsprofil ist mit einem Kommunikationsprofil verbunden.
- Übertragung der Messwerte an berechtigte Marktteilnehmer:
   Die Messwerte werden entsprechend eines Kommunikationsprofils übertragen, in dem hinterlegt ist, welcher externe Marktteilnehmer welche Daten erhält. Dabei werden nur die für diesen Marktteilnehmer relevanten Daten weitergegeben, also beispielsweise für eine monatliche Abrechnung einmal pro Monat ein Messwert.
- Gesicherte Kommunikation über alle Schnittstellen (WAN, HAN, LMN):
   Zu den Kommunikationspartnern (Zähler, externe Marktteilnehmer, Endkundengeräte, etc.) erfolgt die Kommunikation stets gesichert durch entsprechende Verschlüsselungen und Signaturen. In der Regel wird hierzu TLS eingesetzt.
- Signatur der Daten:
   Durch die Signierung der Daten können diese eindeutig einem bestimmten Gateway bzw. einem bestimmten Zähler zugeordnet werden; die Identität des Gateways und damit der zugehörigen Daten wird so vor Manipulationen geschützt.
- Steuerung von CLS (Controllable Local System) Geräten über die Proxy Funktionalität:
   Der Gateway stellt einen transparenten Tunnel zu CLS-Geräten her. CLS-Geräte können dabei dezentrale Erzeuger oder Lastschaltgeräte sein. Die Kommunikation erfolgt zwischen externem Marktteilnehmer und CLS, der SmartMeter-Gateway dient als vertrauenswürdiger "Man-in-the-middle", der die Kommunikation nur bei entsprechender Berechtigung zulässt.

Die sichere Umsetzung dieser Funktionen muss im Rahmen der Zertifizierung nachgewiesen werden. An welcher Stelle innerhalb des Gateways und auf welche Weise dies erreicht wird, ist nicht Gegenstand der Vorschriften.

Diese Erkenntnisse werden erfindungsgemäß derart genutzt, dass innerhalb dem Gateway ein erstes und mindestens ein zweites Modul ausgebildet sind. Dabei sind in dem ersten Modul die Komponenten des Gateways integriert, die einer Zertifizierung nach Regelungen bezüglich Energiedatenübertragungen unterzogen werden müssen. In dem/den zweiten Modul/en sind die Komponenten des Gateways integriert, die nach den Regelungen bezüglich Energiedatenübertragungen keiner Zertifizierungen bedürfen. Das erste Modul ist kommunizierend mit dem/den zweiten Modul/en verbunden. Hierzu werden Schnittstellen genutzt, die mit den in den einschlägigen Regelungen geforderten Schnittstellen zusammenfallen können.

Durch diese einfache Maßnahme, nämlich dem Verschieben der zertifizierungsbedürftigen Komponenten in ein eigenes Modul, kann das erfindungsgemäße Gateway deutlich flexibler angepasst werden. Es ist lediglich ein in seiner Komplexität deutlich reduziertes Modul einer Zertifizierung zu unterwerfen, während alle in dem/ den zweiten Modul/en enthaltenen Komponenten relativ beliebig angepasst oder ausgetauscht werden können, ohne ein erhaltenes Zertifikat zu gefährden. Damit kann das Gateway flexibel an verschiedenste technische Neuerungen und unterschiedliche Nutzungsbedingungen angepasst werden. Ferner lässt sich das erste Modul in die verschiedensten Vorrichtungen integrieren, ohne jede Vorrichtung separat zertifizieren zu müssen. Das Gateway erfüllt durch Verwendung des ersten Moduls die Anforderungen der einschlägigen Regelungen. Des Weiteren lässt sich eine Gesamtvorrichtung "einfach" an nationale Regelungen anpassen, indem ein entsprechend auf das jeweilige Land angepasstes erstes Modul in der Vorrichtung eingesetzt wird. Dies trägt noch weiter zur Flexibilisierung bei.

Es sei darauf hinzuweisen, dass der Begriff "Regelung bezüglich Energiedatenübertragung" weit zu verstehen ist. Insbesondere sind hier regulatorische Vorschriften in Form von Gesetzen gemeint, wie sie beispielsweise mit dem deutschen EnWG und dem zugehörigen Schutzprofil bzw. der zugehörigen Technischen Richtlinie des BSI gegeben sind. Allerdings fallen hierunter auch gesetzesähnliche Regelungen, die beispielsweise durch Normierungsgremien oder -institute erlassen werden. Wesentlich ist lediglich, dass die Regelungen gewisse Anforderungen definieren, die an die Art der Bereitstellung und Übertragung von Energiedaten gestellt sind und deren Einhaltung durch einen Zertifizierungsprozess nachgewiesen werden muss. Durch welche Regelungen dies konkret geschieht, ist zweitrangig.

Es sei ferner darauf hinzuweisen, dass bei dem erfindungsgemäßen Gateway vorzugsweise eine strikte Trennung zwischen zertifizierungsbedürftigen Komponenten und nichtzertifizierungsbedürftigen Komponenten vorgenommen wird, so dass das erste Modul ausschließlich die Komponenten enthält, die einer Zertifizierung unterworfen werden müssen. Allerdings kann das erste Modul prinzipiell auch wenige Komponenten enthalten, die nicht zertifizierungsbedürftig sind. Enthält das erste Modul beispielsweise ein Netzgerät zur Energieversorgung des ersten Moduls, so soll dies immer noch im Rahmen der Erfindung sein, auch wenn das Netzteil keiner Zertifizierung bedarf. Wesentlich ist, dass die zertifizierungsbedürftigen Komponenten in einem Modul integriert sind.

Der Begriff "Modul" bezeichnet eine abgeschlossene Einheit, die hardwaremäßig und sofern einschlägig auch softwaremäßig von anderen Einheiten getrennt sind. Ein Modul wird in den meisten Fällen auf einer separaten Platine aufgebaut sein und - im Falle des ersten Moduls - häufig in einem separaten Gehäuse innerhalb der Vorrichtung gekapselt sein. Dabei kann das Modul auch als vergossenes Steckmodul ausgebildet sein.

Der Begriff "übertragener Energie" bezieht sich auf verschiedenste Energieformen im weitesten Sinne. So kann übertragene elektrische Energie ebenso mit dem Messsystem erfasst werden wie Wärmeenergie, Gas oder auch Wasser.

Ganz besonders bevorzugter Weise kommt das erfindungsgemäße Gateway zur Erfassung von übertragener elektrischer Energie zum Einsatz. Dabei ist die "Richtung" der Übertragung unerheblich. Es kann ebenso die Erzeugung wie der Verbrauch elektrischer Energie erfasst werden.

Das Messsystem, in dem die erfindungsgemäße Vorrichtung eingesetzt ist, umfasst vorzugsweise mindestens eine Messeinrichtung zur Erfassung von übertragener Energie. Die Messeinrichtung ist dazu ausgebildet, die in einem Versorgungsnetzwerk oder auf einer Teilstrecke übertragene Energie zu erfassen. Im Falle der Übertragung von elektrischer Energie umfasst die Messeinrichtung ein elektronischer Stromzähler, der häufig die in einem Gebäude oder einem Teil eines Gebäudes verbrauchte elektrische Energie erfasst. Die erfassten Messwerte können über eine Schnittstelle abgerufen oder übertragen werden.

Zusätzlich umfasst das Messsystem vorzugsweise eine Datenspeicherungseinrichtung. Die Datenspeicherungseinrichtung ist kommunizierend mit der Messeinrichtung verbindbar, wobei für die Kommunikation zwischen Datenspeicherungseinrichtung und Messeinrichtung vorzugsweise paketorientierte Übertragungstechniken eingesetzt werden. Über diese Kommunikationsverbindung werden die durch die Messeinrichtung erfassen Messwerte an die Datenspeicherungseinrichtung übermittelt, wo die Messwerte geeignet gespeichert werden. Die Messwerte werden dann beispielsweise für Abrechnungszwecke, zur Darstellung der aktuellen Energieerzeugung oder des aktuellen Energieverbrauchs oder für Steuerungszwecke innerhalb des Versorgungsnetzwerkes aufbereitet und/oder genutzt.

Ganz besonders bevorzugter Weise ist die erfindungsgemäße Vorrichtung ein Gateway, der einen Zugang zu der Messeinrichtung bietet. Wenn beispielsweise ein aktueller Messwert von der Messeinrichtung angefragt wird, wird diese Anfrage durch den Gateway empfangen, der die Beantwortung der Anfrage - üblicherweise nach vorheriger Berechtigungsprüfung - veranlasst.

Dabei ist der Gateway vorzugsweise zwischen Messeinrichtung und Datenspeicherungseinrichtung geschaltet. Die Datenspeicherungseinrichtung fragt Messwerte dann bei dem Gateway ab (sogenannter Pull-Betrieb), der die Messwerte entweder aus dem eigenen Zwischenspeicher lädt oder die Daten bei der Messeinrichtung abfragt. Der Gateway leitet die angefragten Messwerte an die Datenspeicherungseinrichtung weiter. Beim Push-Betrieb überträgt der Gateway in regelmäßigen Abständen Messwerte an die Datenspeicherungseinrichtung. Die regelmäßigen Abstände sind durch den jeweiligen Verwendungszweck der Messwerte definiert und können von wenigen Minuten (für aktuell übertragene Energie) bis hin zu mehreren Tagen oder gar Monate (für Abrechnungszwecke) variieren.

Vorzugsweise weist das erste Modul einen Prozessor und mindestens einen Speicher auf, wobei der/die Speicher auf verschiedenste Weise implementiert sein kann/können. Der Speicher kann einen Arbeitsspeicher für den Prozessor und einen Programmspeicher umfassen. Zusätzlich kann - beispielsweise bei Ausgestaltung der Vorrichtung als Gateway - ein nichtflüchtiger Speicher vorgesehen sein, in dem Messwerte von der Messeinrichtung zwischengespeichert werden.

Der Prozessor ist zusammen mit den Programmen aus dem Programmspeicher dazu ausgestaltet, die in der einschlägigen Regelung geforderten Funktionen alleine oder in Zusammenarbeit mit weiteren Komponenten zu erfüllen.

Vorzugsweise umfasst das erste Modul ferner ein Sicherheitsmodul, in dem vorzugsweise alle sicherheitsrelevanten Funktionen des ersten Moduls integriert sind. Zu den sicherheitsrelevanten Funktionen können Signieren, Verschlüsseln, das Aufbauen und Betreiben einer Tunnelverbindung (beispielsweise mittels TLS) oder das Steuern von Zugriffen gehören. So können beispielsweise die über eine Weitbereichsschnittstelle übertragenen Messwerte durch das Sicherheitsmodul signiert und über ein durch das Sicherheitsmodul aufgebauten TLS-Tunnel an die Datenspeicherungseinrichtung übermittelt werden. Das Sicherheitsmodul ist vorzugsweise dazu ausgestaltet, die jeweils von der einschlägigen Regelung geforderten Sicherheitsanforderungen zu erfüllen oder zu unterstützen.

Dem Sicherheitsmodul kann ein Sicherheitsspeicher zugeordnet sein, auf den kein direkter Zugriff von "außen" möglich ist, d.h. der Zugriff auf die in dem Sicherheitsspeicher abgelegten Informationen wird durch das Sicherheitsmodul gesteuert. Die in dem Sicherheitsspeicher abgelegten Informationen können durch das Sicherheitsmodul für das Erfüllen seiner Funktionen genutzt werden. So können beispielsweise in dem Sicherheitsspeicher Schlüssel und Zertifikate abgelegt sein, die bei der Verschlüsselung und/oder der Signierung von Daten verwendet werden.

Andererseits können in dem Sicherheitsspeicher Profile hinterlegt sein, die zur Steuerung von Funktionen innerhalb des ersten Moduls verwendet werden. Diese Profile können Berechtigungsprofile umfassen, die den Zugriff auf Daten steuern. Bei Anfragen über eine Weitbereichsschnittstelle würde das Sicherheitsmodul zunächst ein zugehöriges Berechtigungsprofil aus dem Sicherheitsspeicher aufrufen und überprüfen, ob der angefragte Zugriff erlaubt ist. Nur bei entsprechenden Berechtigungen würde die Anfrage bearbeitet und die angefragten Daten in der Antwort übertragen. Die in dem Sicherheitsspeicher abgelegten Profile können - je nach den Anforderungen an deren Sicherheit - auch Netzstatusdatenprofile, Tarifprofile oder Kommunikationsprofile umfassen. Unter Kommunikationsprofilen wird vorliegend ein besonderes Berechtigungsprofil verstanden, das beispielsweise regelt, welcher externe Marktteilnehmer welche Daten mit welcher Abfragehäufigkeit erhält.

Zur Kommunikation mit dem ersten Modul weist dieses vorzugsweise mindestens eine Schnittstelle auf, wobei die Kommunikation über diese Schnittstellen direkt oder unter Verwendung eines geeigneten zweiten Moduls erfolgen kann. Die Schnittstellen können eine WAN (Wide Area Network)-Schnittstelle, eine LMN (Local Metrological Network)-Schnittstelle und/oder eine HAN (Home Area Network) Schnittstelle umfassen und können auf verschiedenste Arten ausgebildet sein. Bussysteme lassen sich ebenso verwenden wie serielle Direktverbindungen. Auch eine proprietäre Implementierung der Schnittstelle wäre denkbar. Vorzugsweise erfüllen die Schnittstellen dabei die von den einschlägigen Regelungen bezüglich Energiedatenübertragung geforderten Spezifikationen.

Es sei darauf hingewiesen, dass diese Schnittstellen vorzugsweise lediglich zur Kurzbereichskommunikation ausgebildet sind, d.h. die Kommunikation erfolgt über wenige 10 Meter, vorzugsweise über weniger als 10 Meter, ganz besonders bevorzugter Weise über weniger als einem Meter. Für eine Weitbereichskommunikation ist in dieser bevorzugten Ausgestaltung die Umsetzung auf ein Weitbereichskommunikationsverfahren mittels eines zweiten Moduls notwendig.

Die Kommunikation über diese Schnittstellen erfolgt vorzugsweise verschlüsselt, d.h. die Daten, die über eine Schnittstelle übertragen werden, können nur unter Verwendung eines Entschlüsselungsschlüssels lesbar gemacht werden.

Die WAN-Schnittstelle erlaubt eine Weitbereichskommunikation vorzugsweise unter Verwendung eines zweiten Moduls. Das erste Modul sendet in diesem Fall Daten über die WAN-Schnittstelle an das zweite Modul, das die Daten über ein Weitbereichskommunikationsverfahren überträgt. Der Empfang erfolgt entsprechend. Beispiele für Weitbereichskommunikationsverfahren sind GPRS (General Packet Radio Service), DSL (Digital Subscriber Line) oder BPL (Breitband PowerLine).

Über die LMN-Schnittstelle erfolgt die Kommunikation auf kurze Distanzen. Wenn die erfindungsgemäße Vorrichtung einen Gateway umfasst, kann die Kommunikation mit der Messeinrichtung über die LMN-Schnittstelle erfolgen. Die LMN-Schnittstelle kann beispielsweise durch M-Bus, Wireless M-Bus, RS485 oder RS232 realisiert sein. Je nach Ausgestaltung kann die LMN-Schnittstelle eine Kommunikation direkt (beispielsweise bei dem recht einfache RS232) oder über ein zweites Modul (beispielsweise bei Wireless M-Bus) erfolgen. Bei manchen Regelungen bezüglich Energiedatenübertragung kann die Auswahl für die Implementierung der LMN-Schnittstelle auch beschränkt sein. So geben die aktuellen deutschen Regelungen die Verwendung von RS485 und Wireless M-Bus vor.

Über die HAN-Schnittstelle ließe sich die Kommunikation mit "externen" Geräten ermöglichen, die meist innerhalb des gleichen Gebäudes wie die erfindungsgemäße Vorrichtung betrieben werden. "Extern" bedeutet in diesem Kontext, dass diese Geräte nicht direkt zu dem Messsystem gerechnet werden können. Beispiele für externe Geräte sind Computer, Tablets, Smartphones, etc., mittels denen ein Endverbraucher mit der erfindungsgemäßen Vorrichtung kommunizieren und beispielsweise den aktuellen Stromverbrauch einsehen kann. Die Kommunikation über die HAN-Schnittstelle dürfte in den meisten Fällen unter Verwendung eines zweiten Moduls erfolgen, wobei das entsprechende zweite Modul beispielsweise WLAN (Wireless Local Area Network), Bluetooth oder PLC für die Kommunikation mit dem externen Gerät nutzt.

Das zweite Modul kann verschiedenste Funktionen erfüllen. So kann das zweite Modul zur Energieversorgung der Vorrichtung, insbesondere des ersten Moduls, ausgestaltet sein. In einer bevorzugten Ausgestaltung ist das zweite Modul derart ausgebildet, dass mittels dieses zweiten Moduls eine Weitbereichskommunikation erfolgen kann. Entsprechend ist dieses zweite Modul über eine WAN-Schnittstelle kommunizierend mit dem ersten Modul verbunden. Das erste Modul sendet dann beispielsweise zu übertragende Messwerte in verschlüsselter und signierter Form über die WAN-Schnittstelle an das zweite Modul, das wiederum die Messwerte an ein entferntes Geräte (beispielsweise die Datenspeicherungseinrichtung) überträgt. Wenn das zweite Modul zur Weitbereichskommunikation ausgebildet ist, ist das zweite Modul ein Kommunikation-Modem, vorzugsweise ein Powerline-Modem oder ein DSL-Modem. Wenn beispielsweise das zweite Modul ein Powerline-Modem ist, kann dieses zweite Modul über die WAN-Schnittstelle mit dem ersten Modul kommunizieren, wobei das zweite Modul die übertragenen, verschlüsselten Information in Powerline-Signale umsetzt und auf die Stromkabel moduliert überträgt.

Andere mögliche zweite Module umfassen eine Messeinrichtung des Messsystems, das mit dem ersten Modul und gegebenenfalls ein Kommunikationsmodem in einem gemeinsamen Gehäuse integriert ist (beispielsweise SmartMeter mit integriertem Gateway und gegebenenfalls PLC-Modem) oder ein HomeAutomationGateway, in den das ersten Modul und ein gegebenenfalls gemeinsam genutztes Kommunikationsmodem integriert ist.

Das erste Modul kann zur Bereitstellung eines transparenten Tunnels zu CLS (Controllable Local System)-Geräten ausgebildet sein. Zu den CLS-Geräten zählen die Geräte eines Benutzers, die nicht zu dem eigentlichen SmartMetering-System gehören aber zur Kommunikation die erfindungsgemäße Vorrichtung unter Verwendung der HAN-Schnittstelle nutzen. Zu CLS-Geräten können verschiedenste Einrichtungen und Systeme gehören. Generatoren oder kleinere Kraftwerke können ebenso CLS-Geräte darstellen wie steuerbare Lasten, Haushaltsgeräte, Klimageräte oder auch Antriebe für Fensteröffner.

In einer besonders bevorzugten Ausgestaltung sind das ersten Modul und das/die zweite/n Modul/e zwar in einem gemeinsamen Gehäuse angeordnet aber trennbar voneinander ausgebildet. Im einfachsten Fall sind die beiden Module über Kabel mit Steck- oder Schraubverbinder miteinander verbunden und lassen sich damit leicht voneinander trennen. Allerdings können das erste Modul und das/die zweite/n Modul/e auch auf einer gemeinsame Trägerplatine gesteckt werden, wobei die einzelnen Module als Steckmodule ausgebildet sind.

Dabei ist das erste Modul vorzugsweise in einem gekapselten Gehäuse angeordnet. Die Kapselung kann beispielsweise durch Vergießen des Gehäuses oder durch einen beispielsweise verplombten Deckel erreicht sein. Alternativ könnte auch lediglich das erste Modul auf der Platine vergossen sein, d.h. ohne eine zusätzliche Kapselung.

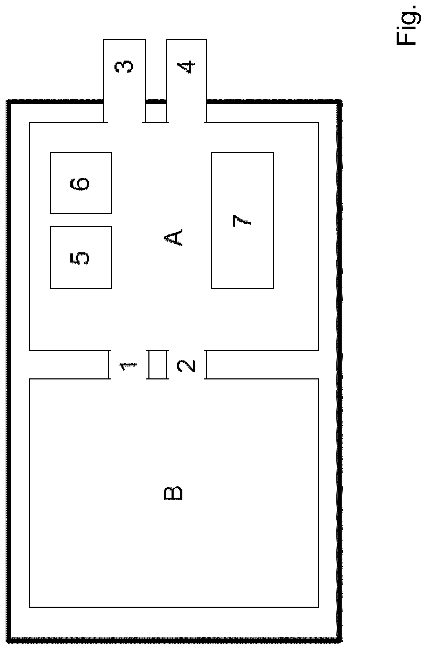

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt die einzige
- Fig.: eine erfindungsgemäße Vorrichtung in Form eines Gateways, wobei das zweite Modul durch ein Kommunikationsmodem gebildet ist.

Eine Ausgestaltung einer erfindungsgemäßen Vorrichtung wird nachfolgend anhand des deutschen EnWG zusammen mit der Technischen Richtline und dem Schutzprofil des BSI näher erläutert. Die erfindungsgemäße Vorrichtung gemäß der einzigen Fig. umfasst ein erstes Modul A - ein SmartMeter-Gateway (SMGW)-Integrationsmodul - und eine davon gekapseltes zweites Modul B - im Ausführungsbeispiel ein Breitband-Powerline-Modem. Das SMGW-Integrationsmodul ist vollkommen gekapselt von dem zweiten Modul und über modulare Schnittstellen für viele verschiedene Produkte, also verschiedenste Ausgestaltungen des zweiten Moduls, nutzbar. Ein mögliches Produkt entsteht durch Integration mit einem Breitband-Powerline-Modem. Das SMGW-Integrationsmodul ist aber dennoch baulich eine eigenständige Platine und nutzt - abgesehen vom Netzteil (Schnittstelle 1) und Gehäuse - nicht die Hardware-Kapazitäten des Breitband-Powerline-Modems. Insofern könnte die Breitband-Powerline-Lösung auch durch andere Kommunikationsbausteine (Platinen) ersetzt werden. Die separate Hardware des SMGW-Integrationsmoduls enthält alle wesentlichen Bestandteile eines "embedded systems" und erfüllt alle Anforderungen aus Technischer Richtlinie und Schutzprofil. Es ist mit einem Sicherheitsmodul (Hardware Security Module 5) ausgestattet, das durch das Schutzprofil gefordert wird. Das Hardware Security Module 5 wird zum Speichern der Schlüssel und Zertifikate in einem Sicherheitsspeicher und für bestimmte Verschlüsselungsalgorithmen genutzt. Das SMGW-Integrationsmodul wird daneben mit einem eigenständigen Prozessor 6 und einem nicht-flüchtigen Speicher 7 für die relevanten Messwerte ausgestattet. Zusätzlich sind dem Prozessor ein nicht eingezeichneter Arbeitsspeicher und ein nicht eingezeichneter Programmspeicher zugeordnet, wobei der Arbeitsspeicher und der Programmspeicher in dem SMGW-Integrationsmodul enthalten sind.

Die Zertifizierung wird auf den relevanten Prüfgegenstand (TOE) im SMGW-Integrationsmodul fokussiert und endet weitgehend an den in Technischer Richtlinie und Schutzprofil definierten Schnittstellen. Die Schnittstellen sind in der Figur wie folgt dargestellt:
- Home Area Network HAN (Schnittstelle 3)
- Local Metrological Network (Schnittstelle 4)
- Wide Area Network (Schnittstelle 2)
- Energieversorgung (Schnittstelle 1)

Die WAN Schnittstelle ist in der Beispielintegration mit dem Kommunikationsmodem verbunden. Daneben nutzt das SMGW-Integrationsmodul das Netzteil des Kommunikationsmodems und wird über die Schnittstelle 1 mit Energie versorgt. Die WAN-Schnittstelle entspricht genau den Spezifikationen der Technischen Richtlinie, das Kommunikationsmodem dient lediglich als transparenter Weitverkehrsnetzzugang.

Dieses Vorgehen erleichtert auch die Integration in andere Produkte, da nicht das ganze Produkt dem vollen Zertifizierungsaufwand unterliegt, sondern im wesentlichen das SMGW-Integrationsmodul. Nach der Erstzertifizierung ist das Integrationsmodul mit geringem Aufwand in andere Produkte integrierbar. Es ist darüber hinaus vorstellbar, das Integrationsmodul in andere Kommunikationsmodems oder direkt in einen Zähler zu integrieren. Auch eine Variante mit Zähler und Kommunikationsmodem ist aufbauend auf dem Integrationsmodul realisierbar. Hier sind zweite Module B jeweils durch Zähler und Kommunikationsmodem gebildet. Bei der LMN-Schnittstelle ist der Protokollstack bis zur die physische Kommunikation im Schutzprofil spezifiziert. Daher ist die Wireless M-Bus und der RS485-Chip Gegenstand der Zertifizierung und damit Teil des Integrationsmodul A. Für die Entwicklung eines eigenständigen SmartMeter-Gateways muss lediglich ein Netzteil und ein geeignetes, versiegelbares Gehäuse beigestellt werden, während für die Integration in andere Kommunikationsmodems die Spannungsversorgung direkt im Modem enthalten sein kann.

Die Erfindung ist bei allen SmartMetering-Lösungen nutzbar, die in Zukunft ein SmartMeter-Gateway enthalten, das nach Schutzprofil und Technischer Richtlinie zertifiziert sein muss. Das Integrationsmodul stellt die Konformität zu den regulatorischen Vorgaben her. Vor allem trifft das auf Kommunikationsmodems, Zähler aber auch sonstige Bestandteile eines Metering-Systems zu, die nicht unmittelbar unter die Spezifikationen der Technischen Richtlinie und des Schutzprofils fallen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- A: erstes Modul
- B: zweites Modul
- 1: Netzteilanschluss
- 2: WAN-Schnittstelle
- 3: HAN-Schnittstelle
- 4: LMN-Schnittstelle
- 5: Sicherheitsmodul (HSM)
- 6: Prozessor
- 7: Speicher

## Patentansprüche

1. Gateway zum Einsatz in einem Messsystem zur Erfassung von übertragener Energie, umfassend ein erstes Modul (A) und ein zweites Modul (B), wobei das erste und das zweite Modul (A, B) über mindestens eine Schnittstelle (1, 2) kommunizierend miteinander verbunden sind,
**dadurch gekennzeichnet, dass** in dem ersten Modul (A) die Komponenten des Gateways integriert sind, die einer Zertifizierung nach Regelungen bezüglich Energiedatenübertragungen, insbesondere einer regulatorischen Vorschrift, unterzogen werden müssen, und dass in dem zweiten Modul (B) die Komponenten des Gateways integriert sind, die nach den Regelungen bezüglich Energiedatenübertragungen keiner Zertifizierung bedürfen.

2. Gateway nach Anspruch 1, **dadurch gekennzeichnet, dass** das Messsystem mindestens eine Messeinrichtung zur Erfassung von übertragener Energie und eine Datenspeicherungseinrichtung umfasst, wobei die Messeinrichtung kommunizierend mit der Datenspeicherungseinrichtung verbindbar ist.

3. Gateway nach Anspruch 2, **dadurch gekennzeichnet, dass** der Gateway zwischen der Messeinrichtung und der Datenspeicherungseinrichtung angeordnet ist.

4. Gateway nach Anspruch 2 oder 3, **dadurch gekennzeichnet, dass** die Messeinrichtung ein SmartMetering-System zur Erfassung von verbrauchter und/oder erzeugter elektrischer Energie umfasst.

5. Gateway nach einem der Ansprüche 1 bis 4, **dadurch gekennzeichnet, dass** das erste Modul (A) einen Prozessor (6) und mindestens einen Speicher (7) umfasst.

6. Gateway nach einem der Ansprüche 1 bis 5, **dadurch gekennzeichnet, dass** das erste Modul (A) ein Sicherheitsmodul (5) umfasst.

7. Gateway nach Anspruch 6, **dadurch gekennzeichnet, dass** das Sicherheitsmodul (5) zur Verschlüsselung und/oder Signierung von Daten, insbesondere von durch das Messsystem erzeugten Messdaten, ausgebildet ist.

8. Gateway nach Anspruch 6 oder 7, **dadurch gekennzeichnet, dass** dem Sicherheitsmodul (5) ein Sicherheitsspeicher zugeordnet ist, in dem Schlüssel und/ oder Zertifikate abgespeichert sind, und wobei die in dem Sicherheitsspeicher abgelegten Inhalte bei der Verschlüsselung und/oder Signierung von Daten verwendet werden.

9. Gateway nach einem der Ansprüche 6 bis 8, **dadurch gekennzeichnet, dass** in dem Sicherheitsspeicher mindestens ein Berechtigungsprofil gespeichert ist und dass das Sicherheitsmodul (5) zur Steuerung von Zugriffen auf Daten basierend auf das/die Berechtigungsprofil/e ausgebildet ist.

10. Gateway nach Anspruch 2 und einem der Ansprüche 6 bis 9, **dadurch gekennzeichnet, dass** das erste Modul (A) zur Abfrage von Messwerten von der Messeinrichtung und zur Speicherung der Messwerte in dem Speicher (7) ausgebildet ist.

11. Gateway nach einem der Ansprüche 1 bis 10, **dadurch gekennzeichnet, dass** das erste Modul (A) eine WAN Wide Area Network-Schnittstelle eine LMN Local Metrological Network-Schnittstelle und/oder eine HAN Home Area Network-Schnittstelle aufweist, wobei eine Kommunikation auf der/den Schnittstelle/n vorzugsweise verschlüsselt und/oder signiert erfolgt.

12. Gateway nach einem der Ansprüche 1 bis 11, **dadurch gekennzeichnet, dass** das zweite Modul (B) zur Weitbereichskommunikation ausgebildet ist, wobei das zweite Modul (B) über eine WAN Wide Area Network-Schnittstelle (2) kommunizierend mit dem ersten Modul (A) verbunden ist.

13. Gateway nach einem der Ansprüche 1 bis 12, **dadurch gekennzeichnet, dass** das zweite Modul (B) durch ein Kommunikations-Modem, vorzugsweise ein Power-line-Modem, eine Messeinrichtung des Messsystems und/oder ein Home-Automation-Gateway gebildet ist.

14. Gateway nach einem der Ansprüche 1 bis 13, **dadurch gekennzeichnet, dass** das erste Modul (A) zur Bereitstellung eines vorzugsweise transparenten Tunnels zu CLS Controllable Local System-Geräten ausgebildet ist.

15. Gateway nach einem der Ansprüche 1 bis 14, **dadurch gekennzeichnet, dass** das erste Modul (A) und das zweite Modul (B) physisch trennbar voneinander ausgebildet sind.

## Claims

1. Gateway for use in a measurement system for detecting transmitted energy, comprising a first module (A) and a second module (B), wherein the first and the second modules (A, B) are connected to each other so as to communicate via at least one interface (1, 2),
**characterised in that** there are integrated in the first module (A) the components of the gateway which have to be subjected to a certification in accordance with regulations relating to energy data transmissions, in particular a regulatory provision, and **in that** there are integrated in the second module (B) the components of the gateway which according to the regulations relating to energy data transmissions do not require any certification.

2. Gateway according to claim 1, **characterised in that** the measurement system comprises at least one measurement device for detecting transmitted energy and a data storage device, wherein the measurement device can be connected to the data storage device so as to communicate.

3. Gateway according to claim 2, **characterised in that** the gateway is arranged between the measurement device and the data storage device.

4. Gateway according to claim 2 or claim 3, **characterised in that** the measurement device comprises a smart metering system for detecting consumed and/or produced electrical energy.

5. Gateway according to any one of claims 1 to 4, **characterised in that** the first module (A) comprises a processor (6) and at least one store (7).

6. Gateway according to any one of claims 1 to 5, **characterised in that** the first module (A) comprises a safety module (5).

7. Gateway according to claim 6, **characterised in that** the safety module (5) is constructed to encrypt and/or sign data, in particular measurement data produced by the measurement system.

8. Gateway according to claim 6 or claim 7, **characterised in that** there is associated with the safety module (5) a safety store in which keys and/or certificates are stored, and wherein the content stored in the safety store is used in the encryption and/or signing of data.

9. Gateway according to any one of claims 6 to 8, **characterised in that** at least one authorisation profile is stored in the safety store and **in that** the safety module (5) is constructed to control access to data based on the authorisation profile(s).

10. Gateway according to claim 2 and any one of claims 6 to 9, **characterised in that** the first module (A) is constructed to request measurement values from the measurement device and to store the measurement values in the store (7).

11. Gateway according to any one of claims 1 to 10, **characterised in that** the first module (A) has a WAN Wide Area Network interface, an LMN Local Metrological Network interface and/or a HAN Home Area Network interface, wherein a communication on the interface(s) is preferably carried out in an encrypted and/or signed manner.

12. Gateway according to any one of claims 1 to 11, **characterised in that** the second module (B) is constructed for wide area communication, wherein the second module (B) is connected to the first module (A) via a WAN Wide Area Network interface so as to communicate.

13. Gateway according to any one of claims 1 to 12, **characterised in that** the second module (B) is formed by a communication modem, preferably a Powerline modem, a measurement device of the measurement system and/or a home automation gateway.

14. Gateway according to any one of claims 1 to 13, **characterised in that** the first module (A) is constructed to provide a preferably transparent tunnel to CLS Controllable Local System devices.

15. Gateway according to any one of claims 1 to 14, **characterised in that** the first module (A) and the second module (B) are constructed to be able to be physically separated from each other.

## Revendications

1. Passerelle destinée à être utilisée dans un système de mesure pour la détection d'une énergie transmise, comprenant un premier module (A) et un deuxième module (B), les premier et deuxième modules (A, B) étant reliés entre eux de manière communicante par l'intermédiaire d'au moins une interface (1, 2),
**caractérisée en ce que**, dans le premier module (A), les composants de la passerelle sont intégrés, qui doivent être soumis à une certification selon des réglementations concernant les transmissions de données énergétiques, plus particulièrement une directive réglementaire et **en ce que**, dans le deuxième module (B), les composants de la passerelle sont intégrés, qui ne nécessitent aucune certification selon les réglementations concernant les transmissions de données énergétiques.

2. Passerelle selon la revendication 1, **caractérisée en ce que** le système de mesure comprend au moins un dispositif de mesure pour la détection d'une énergie transmise et un dispositif d'enregistrement de données, le dispositif de mesure pouvant être relié de manière communicante avec le dispositif d'enregistrement de données.

3. Passerelle selon la revendication 2, **caractérisée en ce que** la passerelle est disposée entre le dispositif de mesure et le dispositif d'enregistrement de données.

4. Passerelle selon la revendication 2 ou 3, **caractérisée en ce que** le dispositif de mesure comprend un système SamrtMetering pour la détection d'une énergie électrique consommée et/ou générée.

5. Passerelle selon l'une des revendications 1 à 4, **caractérisée en ce que** le premier module (A) comprend un processeur (6) et au moins une mémoire (7).

6. Passerelle selon l'une des revendications 1 à 5, **caractérisée en ce que** le premier module (A) comprend un module de sécurité (5).

7. Passerelle selon la revendication 6, **caractérisée en ce que** le module de sécurité (5) est conçu pour le chiffrement et/ou la signature de données, plus particulièrement de données de mesure générées par le système de mesure.

8. Passerelle selon la revendication 6 ou 7, **caractérisée en ce que**, au module de sécurité (5), correspond une mémoire de sécurité, dans laquelle sont enregistrés des clés et/ou des certificats et les contenus enregistrés dans la mémoire de sécurité étant utilisés lors du chiffrement et/ou de la signature des données.

9. Passerelle selon l'une des revendications 6 à 8, **caractérisée en ce que**, dans la mémoire de sécurité, est enregistré au moins un profil d'autorisation et **en ce que** le module de sécurité (5) est conçu pour le contrôle de l'accès à des données sur la base du ou des profil(s) d'autorisation.

10. Passerelle selon la revendication 2 et selon l'une des revendications 6 à 9, **caractérisée en ce que** le premier module (A) est conçu pour l'interrogation de valeurs de mesure par le dispositif de mesure et pour l'enregistrement des valeurs de mesure dans la mémoire (7).

11. Passerelle selon l'une des revendications 1 à 10, **caractérisée en ce que** le premier module (A) comprend une interface WAN Wide Area Network, une interface LMN Local Metrological Network et/ou yne interface HAN Home Area Network, une communication sur la ou les interface(s) ayant lieu de préférence de manière chiffrée et/ou signée.

12. Passerelle selon l'une des revendications 1 à 11, **caractérisée en ce que** le deuxième module (B) est conçu pour une communication longue portée, le deuxième module (B) étant reliée de manière communicante avec le premier module (A) par l'intermédiaire d'une interface WAN Wide Area Network (2).

13. Passerelle selon l'une des revendications 1 à 12, **caractérisée en ce que** le deuxième module (B) est constitué d'un modem de communication, de préférence un modem Power-Line, d'un dispositif de mesure du système de mesure et/ou d'une passerelle Home-Automation.

14. Passerelle selon l'une des revendications 1 à 13, **caractérisée en ce que** le premier module (A) est conçu pour la création d'un tunnel de préférence transparent vers des appareils CLS Controllable Local System.

15. Passerelle selon l'une des revendications 1 à 14, **caractérisée en ce que** le premier module (A) et le deuxième module (B) sont conçus de façon à pouvoir être séparés physiquement entre eux.
